# EUROPEAN PATENT APPLICATION

(11) **EP 3 603 994 A1**
(43) Date of publication of application: **05.02.2020**
(21) Application number: 18776896.5
(22) Date of filing: 05.03.2018
(51) Int. Cl.: B60C 13/02, B60C 13/00

(54) **TIRE**

(30) Priority: 30.03.2017 JP 2017068370
(71) Applicant: Bridgestone Corporation, Tokyo 104-8340 (JP)
(72) Inventor: YAMAZAKI, Shinichiro, Tokyo 104-8340 (JP); SHIBATA, Yasuo, Tokyo 104-8340 (JP)
(74) Representative: Oxley, Robin John George
(86) International application number: PCT/JP2018/008256
(87) International publication number: WO 2018/180230

(57) **Abstract**

A protrusion portion (110) of a pneumatic tire is formed by center side protrusion piece portions (111, 112), and end side protrusion piece portions (113, 114) formed at a maximum width position (Wmax) of the tire. The protrusion portion (110) is formed between an end portion in a tire width direction of a tread portion (20), which contacts a road surface, and a folded end (40a) of a carcass ply (40), in a tire radial direction. A height (H2) from a surface of a side wall (100a) of the end side protrusion piece portions (113, 114) is larger than a height (H1) form the surface of the side wall (100a) of the center side protrusion piece portions (111, 112).

## Description

### [Technical Field]

The present invention relates to a tire having a protrusion portion protruded from a surface of a side wall toward an outer side in a tire width direction.

### [Background Art]

Conventionally, a structure of a tire for trucks or buses that has a protrusion portion on a surface of a side wall in order to prevent damage of a tire side portion, specifically a surface of the side wall, caused by contacting a curbstone of a sidewalk, has been known.

For example, Patent Literature 1 discloses a tire for trucks or buses having a wing-like protrusion portion, which is protruded toward an outer side in a tire width direction, on a surface of a side wall closer to a tread.

The tire for trucks or buses is presupposed to be re-treaded (cold re-treaded) by using a vulcanized rubber sheet for a tread. Its object is to prevent the damage of a tire side portion of a base tire, which is to be extended in its lifetime by the re-treading forming the wing-like protrusion portion, so as to improve durability of the tire.

### [Citation List]

### [Patent Literature]

[PTL 1] Japanese Unexamined Patent Application Publication No. 2005-112010

### [Summary of Invention]

In recent years, it is desired to improve so-called precision docking of a route bus that repeatedly stops at bus stops. The precision docking denotes a degree of a distance and a degree of a level difference between a sidewalk and a doorway when the bus stops at a bus stop. The getting on/off performance is enhanced by improving the precision docking.

However, when the precision docking is improved, the surface of the side wall of the tire is rubbed with a curbstone of the sidewalk and the tire side portion is severely worn, and as a result, the failure of the tire might be caused.

It is accordingly considered to form the protrusion portion described above on the tire side portion, however in a case in which the protrusion portion is merely formed, rubber volume is increased and therefore rolling resistance and weight are increased. Especially, in recent years, the increase of the rolling resistance and the weight should be avoided as much as possible due to a desire to improve an environmental performance.

Accordingly, an object of the present invention is, in consideration of the problem described above, to provide a tire capable of preventing failure caused by wear of a tire side portion while suppressing an increase of rolling resistance and weight.

One aspect of the present invention is a tire (pneumatic tire 10) including a protrusion portion (for example, protrusion portion 110) protruded from a surface of a side wall (side wall 100a) toward an outer side in a tire width direction. The protrusion portion is formed by a center side protrusion piece portion (for example, center side protrusion piece portions 111, 112) formed at a maximum width position (maximum width position Wmax) of the tire, and an end side protrusion piece portion (for example, end side protrusion piece portions 113, 114) adjacent to the center side protrusion piece portion in a tire radial direction and formed at an inner side or an outer side in the tire radial direction with respect to the center side protrusion piece portion. The protrusion portion is formed between an end portion in the tire width direction of a tread portion (tread portion 20), which contacts a road surface, and a folded end (folded end 40a) of a carcass ply (carcass ply 40), in the tire radial direction. A height (height H2) from a surface of the side wall of the end side protrusion piece portion is larger than a height (height H1) from the surface of the side wall of the center side protrusion piece portion.

### [Brief Description of Drawings]

[Fig. 1] Fig. 1 is a cross-sectional view along a tire width direction and a tire radial direction illustrating a part of a pneumatic tire 10.
[Fig. 2] Fig. 2 is an enlarged cross-sectional view illustrating a part of a tire side portion 100.
[Fig. 3] Fig. 3 is a side view illustrating a part of the pneumatic tire 10.
[Fig. 4] Fig. 4 is a schematic view illustrating the pneumatic tire 10, which is mounted to a vehicle, contacting a curbstone 300.
[Fig. 5] Fig. 5 is a cross-sectional view along the tire width direction and the tire radial direction illustrating a part of the pneumatic tire 10 in which a protrusion portion 110A is formed.
[Fig. 6] Fig. 6 is an enlarged cross-sectional view illustrating a part of the tire side portion 100 in which the protrusion portion 110A is formed.
[Fig. 7] Fig. 7 is a side view illustrating a part of the pneumatic tire 10 in which a protrusion portion 110B is formed.
[Fig. 8] Fig. 8 is a side view illustrating a part of the pneumatic tire 10 in which a protrusion portion 110C is formed.
[Fig. 9] Fig. 9 is a side view illustrating a part of the pneumatic tire 10 in which a protrusion portion 110D is formed.
[Fig. 10] Fig. 10 is an enlarged cross-sectional view illustrating a part of the tire side portion 100 in which a protrusion portion 110E is formed.
[Fig. 11] Fig. 11 is an enlarged cross-sectional view illustrating a part of the tire side portion 100 in which a protrusion portion 100F is formed.

### [Description of Embodiments]

Hereinafter, an embodiment of the present invention will be described with reference to the drawings. The same reference signs or similar reference signs are assigned to the same functions or the same components and the description thereof is omitted as needed.

### (1) Schematic configuration of tire

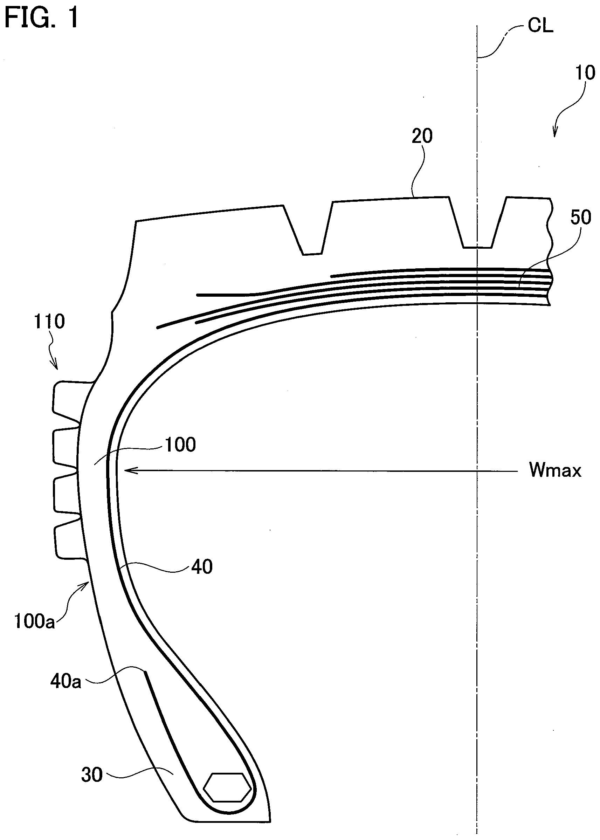

Fig. 1 is a cross-sectional view along a tire width direction and a tire radial direction illustrating a part of a pneumatic tire 10. Fig. 1 shows one side of the tire with respect to a tire equatorial line CL. In Fig. 1, an illustration of hatching indicating a cross section is omitted (hereinafter the same).

The pneumatic tire 10 is formed as a radial tire for trucks or buses (heavy load pneumatic tire), especially formed as a tire mounted to a route bus that repeatedly stops at bus stops. A size of the pneumatic tire 10 is not especially limited, however examples of a general size of the tire used for the route bus include 275/70R22.5, 245/70R19.5 and 205/80R17.5.

The pneumatic tire 10 is provided with a tread portion 20 that contacts a road surface, and a bead portion 30 mounted to a wheel rim (not shown). Further, the pneumatic tire 10 is provided with a tire side portion 100 formed between the tread portion 20 and the bead portion 30.

Further, in the tread portion 20, a pattern (tread pattern) suitable to a property of a vehicle (bus) to which the pneumatic tire 10 is mounted (for example, a mainly low speed travelling vehicle or a mainly high speed travelling vehicle) and performance of the pneumatic tire 10 to be required (for example, low rolling resistance or wear resistance) is formed.

A carcass ply 40 and a belt layer 50 are formed at an inner side in a tire radial direction of the tread portion 20. The carcass ply 40 forms a frame of the pneumatic tire 10 and is folded by a pair of the bead portions 30 toward an outer side in a tire width direction.

The belt layer 50 includes a pair of crossing belt layers, specifically two belts in which tire cords therein are oriented in different directions to each other. The belt layer 50 may further include a belt for reinforcing the pneumatic tire 10.

A protrusion portion 110 is formed on the tire side portion 100. The protrusion portion 110 is formed on a surface of a side wall 100a that forms an outer side wall surface of the tire side portion 100. The protrusion portion 110 is protruded from the surface of the side wall 100a toward an outer side in the tire width direction.

The protrusion portion 110 contacts a curbstone first when the vehicle stops at a bus stop. The protrusion portion 110 occupies a region including a maximum width position Wmax in the tire width direction.

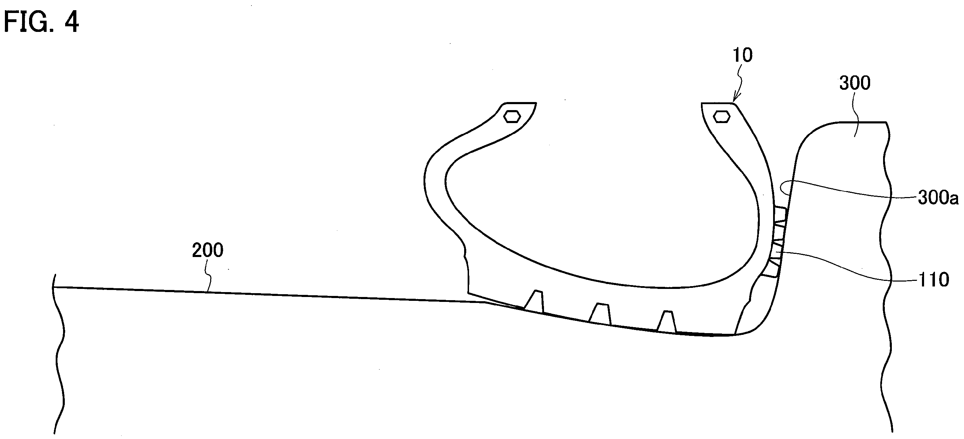

The protrusion portion 110 is formed between an end portion in the tire width direction of the tread portion 20, which contacts a road surface 200 (not shown in Fig. 1, see Fig. 4), and a folded end 40a of the carcass ply 40, in a tire radial direction.

### (2) Shape of protrusion portion

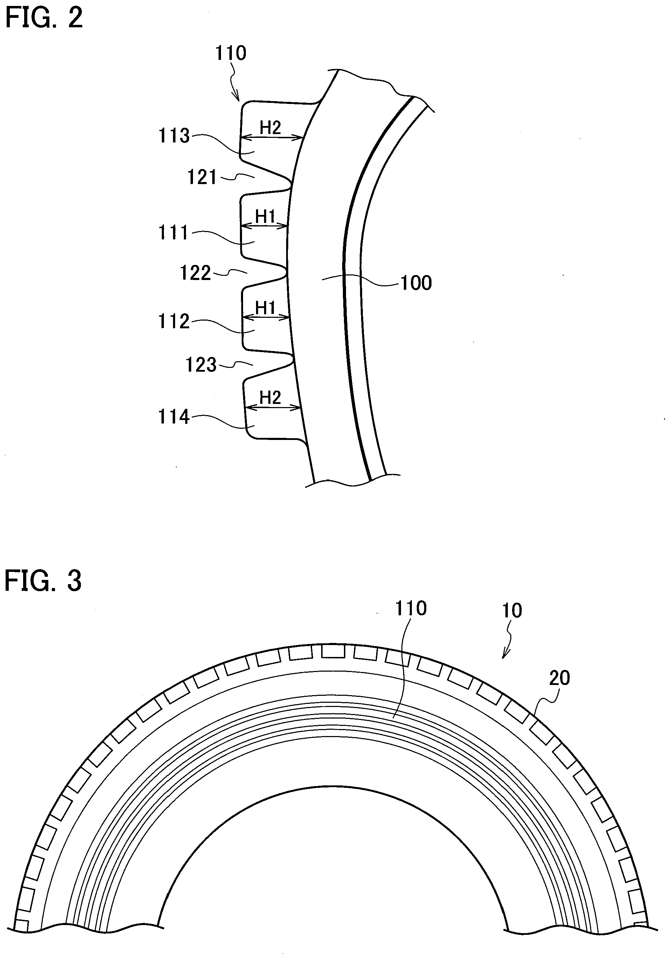

Fig. 2 is an enlarged cross-sectional view illustrating a part of the tire side portion 100. Fig. 3 is a side view illustrating a part of the pneumatic tire 10.

As shown in Fig. 2 and Fig. 3, the protrusion portion 110 is formed by a plurality of protrusion piece portions. Specifically, the protrusion portion 110 is formed by center side protrusion piece portions 111, 112 and end side protrusion piece portions 113, 114. That is, in the present embodiment, the protrusion portion 110 is formed by four protrusion piece portions. However, the number of the protrusion piece portions is not especially limited.

The center side protrusion piece portion 111 and the center side protrusion piece portion 112 are formed at a position corresponding to the maximum width position Wmax. Specifically, two center side protrusion piece portions 111, 112 and a groove portion 122 formed therebetween are formed at the maximum width position Wmax.

Further, a groove portion 121 is formed between the center side protrusion piece portion 111 and the end side protrusion piece portion 113, and a groove portion 123 is formed between the center side protrusion piece portion 112 and the end side protrusion piece portion 114.

In this way, the protrusion portion 110 is separated (divided) into a plurality of parts in the tire radial direction by a plurality of the groove portions.

In the present embodiment, as shown in Fig. 3, the protrusion portion 110 is continuously formed in a tire circumferential direction, in a tire side view.

The end side protrusion piece portion 113 is adjacent to the center side protrusion piece portion 111 in the tire radial direction, and formed at an outer side in the tire radial direction with respect to the center side protrusion piece portion 111. The end side protrusion piece portion 114 is adjacent to the center side protrusion piece portion 112 in the tire radial direction, and formed at an inner side in the tire radial direction with respect to the center side protrusion piece portion 112.

A height H2 from the surface of the tire side portion 100 of each of the end side protrusion piece portion 113 and the end side protrusion piece portion 114 is larger than a height H1 from the surface of the tire side portion 100 of each of the center side protrusion piece portion 111 and the center side protrusion piece portion 112. Here, each of the height H1 and the height H2 denotes an average height of the protrusion piece portions. For example, the height is an average of heights of parts at a center and both ends in the tire radial direction in each protrusion piece portion.

The surface of the side wall 100a is formed such that the maximum width position Wmax is located at the outermost side in the tire width direction. The surface of the side wall 100a is curved to be gradually close to an inner side in the tire width direction, toward the outer side and the inner side in the tire radial direction. On the other hand, the surface of the protrusion portion 110 at the outer side in the tire width direction is substantially linear along the tire radial direction (namely, a curvature radius of the surface of the protrusion portion 110 at the outer side in the tire width direction is larger than a curvature radius of the surface of the side wall 100a), and thereby the relationship of the heights described above is fulfilled.

Thus, in each of the end side protrusion piece portion 113 and the end side protrusion piece portion 114, the height from the surface of the side wall 100a becomes larger as being far away from the maximum width position Wmax in the tire radial direction.

As described above, the protrusion portion 110 is provided with a plurality of the groove portions, specifically the groove portions 121 to 123, recessed toward the surface of the side wall 100a. Similar to the height of each of the protrusion piece portions, a depth of each of the groove portions 121 to 123 is larger as being far away from the maximum width position Wmax in the tire radial direction.

Further, a width in the tire radial direction of each of the groove portions 121 to 123 is larger as being far away from the surface of the side wall 100a to an outer end in the tire width direction of the protrusion portion 110.

### (3) Functions and effects

Next, effects of the pneumatic tire 10 in which the protrusion portion 110 is formed will be described. Fig. 4 is a schematic view illustrating the pneumatic tire 10, which is mounted to a vehicle (not shown), contacting a curbstone 300.

As shown in Fig. 4, when the vehicle travelling on the road surface 20 approaches the curbstone 300, the protrusion portion 110 of the pneumatic tire 10 contacts a side surface 300a of the curbstone 300 first. With this, wear of the tire side portion 100 (the surface of the side wall 100a) caused by being rubbed directly with the curbstone 300 and failure caused by the wear can be prevented.

In this way, the protrusion portion 110 is served as a sacrificial worn portion that is worn prior to other part.

Further, as described above, the protrusion portion 110 is formed at the maximum width position Wmax and is divided into a plurality of the protrusion piece portions. Thus, when a load is applied to the pneumatic tire 10 and thereby the tire side portion 100 is deformed, since the protrusion portion 100 is divided into a plurality of the protrusion piece portions, strain energy to be generated becomes small. That is, by dividing the protrusion portion 100 into a plurality of the protrusion piece portions, transmission of the strain is not generated in the protrusion portion 110, namely the strain energy is dispersed, and thereby an increase of loss in the strain energy can be minimized.

With this, deterioration of the rolling resistance can be effectively suppressed even if the rubber volume is increased by forming the protrusion portion 110.

Further, the protrusion portion 110 is provided with the groove portions 121 to 123, and thereby an increase in weight can be suppressed while preventing the wear of the tire side portion 100.

Further, the height H2 from the surface of the tire side portion 100 of each of the end side protrusion piece portion 113 and the end side protrusion piece portion 114 is larger than the height H1 from the surface of the tire side portion 110 of each of the center side protrusion piece portion 111 and the center side protrusion piece portion 112. With this, a whole of the protrusion portion 110 is come into contact securely with the side surface 300a of the curbstone 300, and thereby pressure applied to the protrusion portion 110 can be made uniform. Accordingly, uneven wear of the protrusion portion 110 can be suppressed.

Conventionally, as a countermeasure against wear of the tire side portion 100, a measure that merely increases rubber volume of the tire side portion 100 contacting the curbstone 300 or an obstacle, and a measure that arranges rubber with high wear resistance have been widely adopted, however in such cases, the rolling resistance and the weight might be increased.

In the present embodiment, contrary to the conventional measures, by minimizing the increase of the loss in the strain energy by forming the protrusion portion 110, both of the prevention of the wear of the tire side portion 100 and the suppression of the increase of the rolling resistance and the weight can be achieved.

Further, as described above, the height from the surface of the side wall 100a of each of the end side protrusion piece portion 113 and the end side protrusion piece portion 114 becomes larger as being far away from the maximum width position Wmax in the tire radial direction. With this, the whole of the protrusion portion 110 can be come into contact further securely with the side surface 300a of the curbstone 300.

In the present embodiment, the depth of each of the groove portions 121 to 123 becomes larger as being far away from the maximum width position Wmax in the tire radial direction. With this, the strain energy is further dispersed, and thereby the rolling resistance can be decreased.

In the present embodiment, the width in the tire radial direction of each of the groove portions 121 to 123 becomes larger as being far away from the surface of the side wall 100a to the outer end in the tire width direction of the protrusion portion 110. With this, stress concentration in association with the deformation of bottom parts of the groove portions 121 to 123 can be relaxed.

### (4) Modified examples

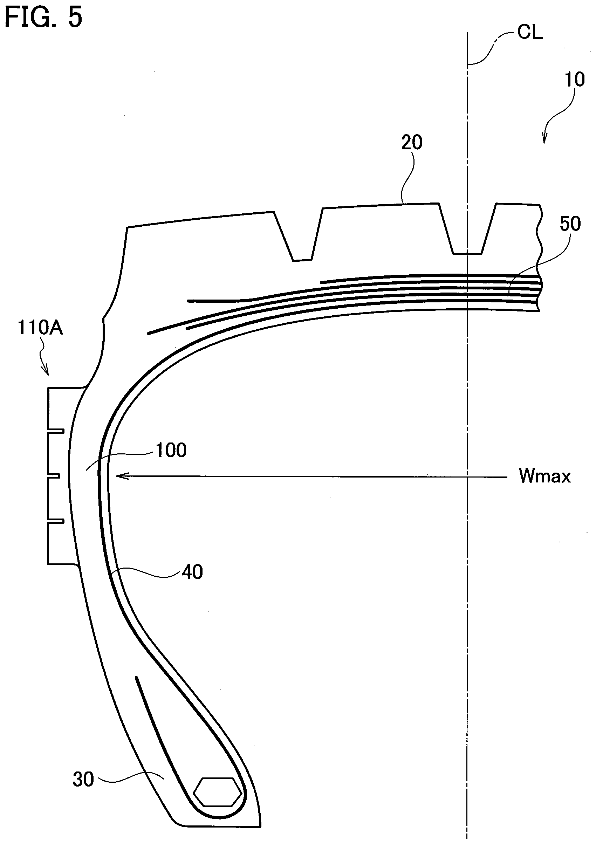

Next, modified examples of the protrusion portion 110 will be described. Specifically, the modified examples relating to a shape of the protrusion portion 110, and an arrangement of the protrusion portion 110 in the tire circumferential direction will be described with reference to Fig. 5 to Fig. 11.

### (4. 1) First modified example

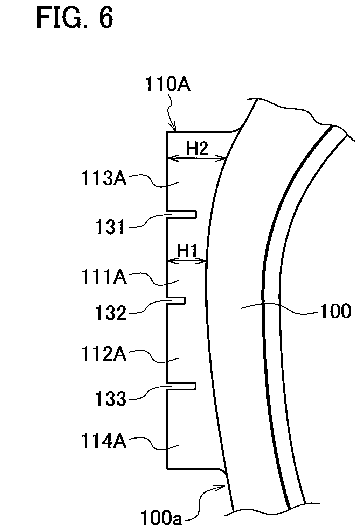

Fig. 5 is a cross-sectional view along the tire width direction and the tire radial direction illustrating a part of the pneumatic tire 10 in which a protrusion portion 110A is formed. Fig. 6 is an enlarged cross-sectional view illustrating a part of the tire side portion 100 in which the protrusion portion 110A is formed. Hereinafter, a configuration different from that of the protrusion portion 110 described above is mainly described, and therefore a description of a similar part is omitted as needed.

As shown in Fig. 5 and Fig. 6, contrary to the protrusion portion 110, the protrusion portion 110A is separated by a plurality of sipes having a width smaller than that of the groove portions 121 to 123 (see Fig. 2).

The protrusion portion 110A is formed by center side protrusion piece portions 111A, 112A and end side protrusion piece portions 113A, 114A. That is, the protrusion portion 110A is formed by four protrusion piece portions, similar to the protrusion portion 110.

The center side protrusion piece portion 111A and the center side protrusion piece portion 112A are formed at a position corresponding to the tire maximum width position Wmax. Specifically, two center side piece portions 111A, 112A and a sipe 132 formed therebetween are formed at the maximum width position Wmax.

Further, a sipe 131 is formed between the center side protrusion piece portion 111A and the end side protrusion piece portion 113A, and a sipe 133 is formed between the center side protrusion piece portion 112A and the end side protrusion piece portion 114A.

A size (width and depth of the groove) of each of the sipes 131 to 133 is not especially limited, however the size may be set such that deformation of the surface of the side wall 100a caused by a load applied to the surface of the side wall 100a is not interrupted by the center side protrusion piece portions 111A, 112A and the end side protrusion piece portions 113A, 114A. Further, each of the sipes 131 to 133 may be formed as a groove portion such as a narrow groove having a width larger than that of the sipe.

Further, as shown in the figures, a depth of the groove may not be set to reach the surface of the side wall 100a. Here, it is preferable to set the size of each of the sipes 131 to 133 larger so as to be similar to the size of the groove portions 121 to 123, from a viewpoint of suppressing an increase of the weight, however it may be appropriately set by considering the balance between wear resistance and durability of a whole of the protrusion portion 110A.

Further, similar to the protrusion portion 110, the protrusion portion 110A fulfills the relation of a height H2 > a height H1.

### (4. 2) Second modified example

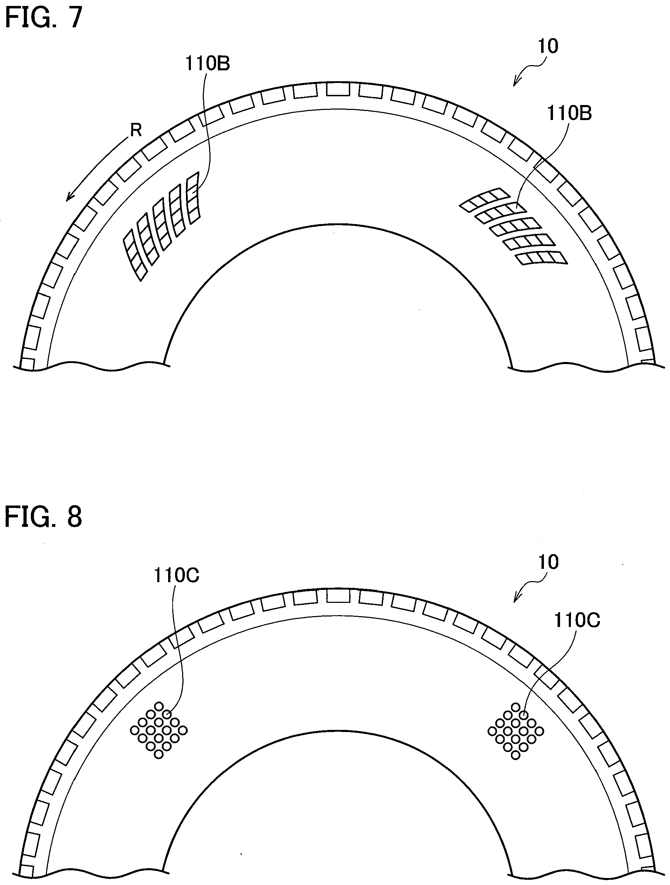

Fig. 7 is a side view illustrating a part of the pneumatic tire 10 in which a protrusion portion 110B is formed. As shown in Fig. 7, contrary to the protrusion portion 110, the protrusion portion 110B is not continuously formed in the tire circumferential direction, and therefore the protrusion portion 110B is formed in a certain region in the tire circumferential direction.

Specifically, the protrusion portions 110B are separately arranged in the tire circumferential direction, in a tire side view. A sectional shape along the tire width direction and the tire radial direction of the protrusion portion 110B is substantially the same as that of the protrusion portion 110.

In the present modified example, each of the protrusion portions 110B is formed by a block of four protrusion piece portions, and the protrusion portions 110B are separately arranged in the tire circumferential direction at predetermined intervals.

The predetermined intervals may be or may not be set to regular intervals, however it is preferable to set the interval such that the surface of the side wall 100a does not contact the curbstone 300 directly.

Further, the protrusion portion 110B is inclined against the tire radial direction in the tire side view. That is, the protrusion portion 110B is arranged not to be parallel to the tire radial direction but to be inclined to cross the tire radial direction. Further, in the modified example, the protrusion portion 110B is formed not to be linear but to be curved in the tire side view.

Such a shape of the protrusion portion 110B is formed along a locus of the pneumatic tire 10 rotating in a rotation direction R when rolling on the road surface 200 (see Fig. 4). Thus, the protrusion portion 110B is along an incident direction when contacting the curbstone 300 (see Fig. 4). With this, wear resistance and durability of the protrusion portion 110B can be improved.

### (4. 3) Third modified example

Fig. 8 is a side view illustrating a part of the pneumatic tire 10 in which a protrusion portion 110C is formed. Similar to the protrusion portions 110B, the protrusion portions 110C are separately arranged in the tire circumferential direction, in the tire side view. Hereinafter, a configuration different from that of the protrusion portion 110B is mainly described.

The protrusion portion 110C is not inclined against the tire radial direction but parallel to the tire radial direction, in the tire side view. Further, a sectional shape along the tire width direction and the tire radial direction of the protrusion portion 110C is similar to that of the protrusion portion 110, while the sectional shape of the protrusion portion 110C is formed in a circular shape in the tire side view. That is, the protrusion piece portion forming the protrusion portion 110C is formed in a cylindrical shape or a conical shape having a taper.

The protrusion portion 110C can be formed relatively easily and therefore a yield rate thereof in producing can be easily increased.

### (4. 4) Fourth modified example

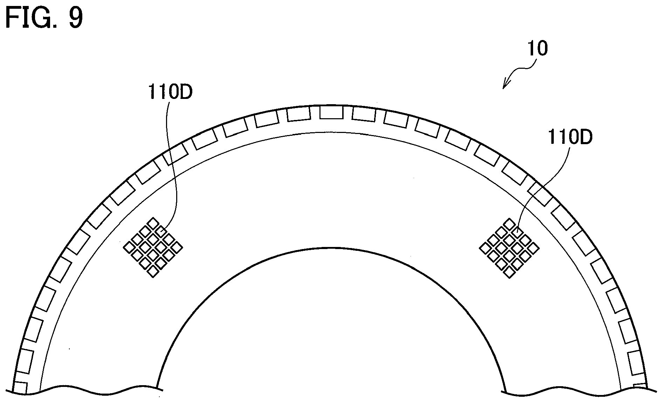

Fig. 9 is a side view illustrating a part of the pneumatic tire 10 in which a protrusion portion 110D is formed. The protrusion portion 110D is extremely similar to the protrusion portion 110C, however a shape of a protrusion piece portion is different.

Specifically, a sectional shape along the tire width direction and the tire radial direction of the protrusion portion 110D is similar to that of the protrusion portion 110.

Similar to the protrusion portion 110C, the protrusion portion 110D can be formed relatively easily and therefore a yield rate thereof in producing can be easily increased.

### (4. 5) Fifth modified example

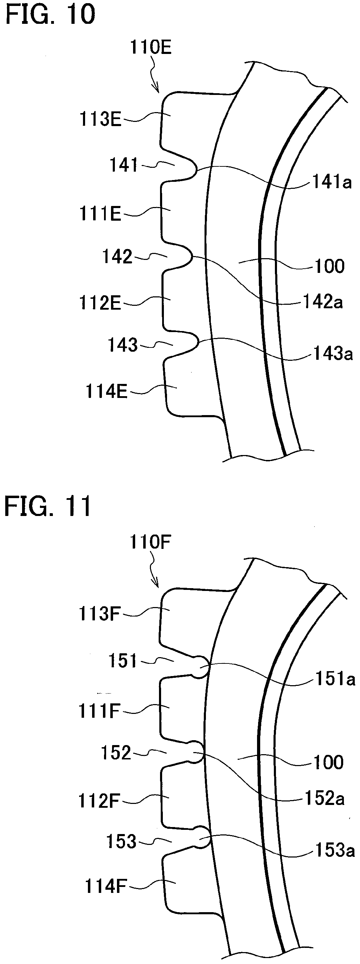

Fig. 10 is an enlarged cross-sectional view illustrating a part of the tire side portion 100 in which a protrusion portion 110E is formed. As shown in Fig. 10, a shape of the protrusion portion 110E is similar to that of the protrusion portion 110 (see Fig. 2), however a shape of a groove portion is different.

Specifically, the protrusion portion 110E is provided with center side protrusion piece portions 111E, 112E, end side protrusion piece portions 113E, 114E, and groove portions 141 to 143.

A bottom portion 141a (142a, 143a) of the groove portion 141 (142, 143) is formed such that a curvature radius is large and therefore the bottom portion 141a is gently curved compared to the protrusion portion 110.

With the shape of a groove bottom such as the bottom portion 141a, stress concentration caused in a specific part of the bottom portion 141a when the pneumatic tire 10 is deformed can be suppressed.

### (4. 6) Sixth modified example

Fig. 11 is an enlarged cross-sectional view illustrating a part of the tire side portion 100 in which a protrusion portion 100F is formed. As shown in Fig. 11, the protrusion portion 110F is similar to the protrusion portion 110E, however a shape of a groove portion is different.

Specifically, the protrusion portion 110F is provided with center side protrusion piece portions 111F, 112F, end side protrusion piece portions 113F, 114F, and groove portions 151 to 153.

A bottom portion 151a (152a, 153a) of the groove portion 151 (152, 153) is formed such that a sectional shape along the tire width direction and the tire radial direction is formed in a circular shape, contrary to the protrusion portion 110 and the protrusion portion 110E.

With the shape of a groove bottom such as the bottom portion 151a, stress concentration caused in a specific part of the bottom portion 151a when the pneumatic tire 10 is deformed can be further suppressed.

### (5) Other embodiments

As described above, the contents of the present invention are described with reference to the examples, however the present invention is not limited to those descriptions. It is obvious for a person skilled in the art to adopt various modifications and improvement.

For example, in the embodiment described above, as shown in Fig. 2, two center side piece portions 111, 112 and the groove portion 122 formed therebetween are formed at the maximum width position Wmax, however only the protrusion piece portion may be formed at the maximum width position Wmax without forming the groove portion. This is similar to the sipe 132 shown in Fig. 6.

Further, the protrusion portion 110 may be formed along the side surface 300a of the curbstone 300 in accordance with an angle of the side surface 300a, specifically an angle between the side surface 300a and the road surface 200. For example, in a case in which the angle is 90 degrees or more and the side surface 300a is inclined toward a side of the sidewalk, the height of the protrusion piece portion may be set to be larger toward the inner side in the tire radial direction.

The protrusion portion 110 may be formed in only the tire side portion 100 at an outer side in a state in which the pneumatic tire 10 is mounted to the vehicle, or may be formed in both of the tire side portions 100. Actually, an appropriate configuration may be selected by considering a possibility of tire rotation of the pneumatic tires 10 (including a possibility of remounting of the tire to the rim wheel), an increase of weight caused by forming the protrusion portion 110, or the like.

Further, the protrusion portion 110 may be formed by replacing the tire side portion 100 worn or damaged (it is called re-side). The replacing of the tire side portion 100 can be performed by a precure method using a vulcanized rubber sheet, or a re-mold method using an unvulcanized rubber sheet. Or alternatively, a component for the replacement in which the protrusion portion 110 is formed (it is not limited to rubber but formed by synthetic resin), may be bonded.

As described above, the embodiments of the present invention are described, however the present invention is not limited to the description and the drawings forming a part of the present disclosure. Various modifications, examples, and operation techniques will be apparent from the present disclosure to a person skilled in the art.

### [Industrial Applicability]

The tire described above is useful to prevent failure caused by the wear of the tire side portion while suppressing the increase of the rolling resistance and the weight.

### [Reference Signs List]

10: pneumatic tire
20: tread portion
30: bead portion
40: carcass ply
40a: folded end
50: belt layer
100: tire side portion
100a: side wall
110, 110A to 110F: protrusion portion
111, 111A, 111E, 111F, 112, 112A, 112E, 112F: center side protrusion piece portion
113, 113A, 113E, 113F, 114, 114A, 114E, 114F: end side protrusion piece portion
121 to 123, 141 to 143, 151 to 153: groove portion
131 to 133: sipe
141a to 143a, 151a to 153a: bottom portion
200: road surface
300: curbstone
300a: side surface

## Claims

1. A tire comprising a protrusion portion protruded from a surface of a side wall toward an outer side in a tire width direction,
wherein the protrusion portion is formed by a center side protrusion piece portion formed at a maximum width position of the tire, and an end side protrusion piece portion adjacent to the center side protrusion piece portion in a tire radial direction and formed at an inner side or an outer side in the tire radial direction with respect to the center side protrusion piece portion,
wherein the protrusion portion is formed between an end portion in the tire width direction of a tread portion, which contacts a road surface, and a folded end of a carcass ply, in the tire radial direction, and
wherein a height from a surface of the side wall of the end side protrusion piece portion is larger than a height from the surface of the side wall of the center side protrusion piece portion.

2. The tire according to claim 1, wherein the height from the surface of the side wall of the end side protrusion piece portion becomes larger as being far away from the maximum width position in the tire radial direction.

3. The tire according to claim 1 or 2, wherein a plurality of groove portions recessed toward the surface of the side wall is formed in the protrusion portion, and
wherein a depth of each of the groove portions becomes larger as being far away from the maximum width position.

4. The tire according to claim 3, wherein a width in the tire radial direction of the groove portion becomes larger as being far away from the surface of the side wall to an outer end in the tire width direction of the protrusion portion.

5. The tire according to any one of claims 1 to 4, wherein the protrusion portions are separately arranged in a tire circumferential direction, in a tire side view.

6. The tire according to claim 5, wherein the protrusion portion is inclined against the tire radial direction, in the tire side view.

7. The tire according to any one of claims 1 to 4, wherein the protrusion portion is continuously formed in a tire circumferential direction, in a tire side view.
